# EUROPEAN PATENT APPLICATION

(11) **EP 4 717 544 A1**
(43) Date of publication of application: **01.04.2026**
(21) Application number: 25204366.6
(22) Date of filing: 24.09.2025
(51) Int. Cl.: B60W 50/00, B60W 10/04, B60W 10/18, B60W 10/20, B60W 50/08, B60K 28/06

(54) **A SYSTEM TO CONTROL A VEHICLE OPERATION AND METHOD THEREOF**

(30) Priority: 27.09.2024 IN 202411073032
(71) Applicant: Novus Hi-Tech Robotic Systemz Private Ltd., 122001 Gurgaon , Haryana (IN)
(72) Inventor: Metha, Sharad, 122001 Gurgaon Haryana (IN); Kaushik, Aman, 122001 Gurgaon Haryana (IN); Agrahari, Ayushman, 122001 Gurgaon Haryana (IN); Singh, Lovepreet, 122001 Gurgaon Haryana (IN); Yadav, Ravi, 122001 Gurgaon Haryana (IN); Kapuria, Anuj, 122001 Gurgaon Haryana (IN)
(74) Representative: Hafner & Kohl PartmbB

(57) **Abstract**

The present disclosure provides a system and a method to control a vehicle operation. The system100 include a driver identification unit 101, an alcohol detection unit102, a control unit104, at least one vehicular detection unit114, a storage unit112, and a driver monitoring unit (DMU) 106. The alcohol detection unit102 detects an alcohol content. The at least one vehicular detection unit114 detects a type of a terrain and an external environment condition in a vehicle vicinity. The control unit104 allows the driver to crank a vehicle when the alcohol content is within a predefined threshold limit, assess a plurality of driver profile information to determine the driving pattern. The control unit104 allows the vehicle operation in a manual mode when a safe driving pattern is identified and controls at least one vehicle function in partial or incremental manner, when an unsafe driving pattern is identified.

## Description

### TECHNICAL FIELD

The present application relates to the technical field of vehicles, and more specifically relates to a system to control a vehicle operation and method thereof.

### BACKGROUND

In recent years, vehicle safety systems have seen significant advancements, aiming to reduce accidents caused by impaired or distracted driving. Alcohol impairment remains a critical factor contributing to road accidents worldwide. Recognizing the need for improved safety measures, vehicle manufacturers and researchers have been focusing on developing systems that can detect alcohol levels in drivers and monitor their driving behavior in real-time.

Modem vehicles are increasingly equipped with driver assistance systems that provide various levels of automation, from basic alerts to full vehicle control under certain conditions. Further, vehicles are increasingly being equipped with sensors that generate data about the surrounding environment and terrain. For instance, some vehicles feature camera systems that capture images of the terrain and nearby objects. However, integrating these systems with alcohol detection and real-time driver monitoring remains a challenge. Current solutions often lack the capability to dynamically assess and respond to the driver's condition and the surrounding environment in an integrated manner.

US Patent 11718329 B2 relates to a method for switching modes for operating a vehicle. The method includes determining, by circuitry of an information processing apparatus, whether a mode for operating the vehicle is to be switched from one of autonomous and manual driving modes to the other of the autonomous and manual driving modes. The method includes obtaining a state of a driver of the vehicle when the mode for operating the vehicle is determined to be switched. The method further includes switching the mode for operating the vehicle from the one of the autonomous and manual driving modes to the other of the autonomous manual driving modes based on the obtained state of the driver.

CN application 108791296 A discloses a vehicle control system that includes a detection module to detect the capacity of driver and a control module, for judging whether the capacity of the driver meets manual drive requirement, if not meeting manual drive requirement, the manual drive control unit of vehicle described in locking simultaneously enters automatic driving mode.

The above-cited prior art is designed to determine the capacity of the diver to operate the vehicle in either the manual drive mode or automatic driving mode for driving, which effectively avoids dangerous driving caused by operating and controlling vehicle and the possible traffic accident caused without driving ability due to driver.

None of the aforementioned arts detects alcohol levels in a driver's sample and continuously monitors the driver's profile to assess their capability to drive safely and makes real-time adjustments to vehicle operations based on external conditions.

The present invention addresses the aforementioned issues and aims to provide a vehicle control system and method that controls vehicle operation by integrating alcohol detection, driver monitoring, and environmental assessment. This system further aims to ensure that the vehicle can only be operated when the driver is deemed capable and to provide automatic interventions when unsafe driving patterns are detected, thereby enhancing overall road safety.

### OBJECTIVES OF THE DISCLOSURE

A primary objective of the present disclosure is to provide a system and a method to control a vehicle operation through real-time alcohol detection and continuous monitoring of the driver's condition to improve road safety.

Another objective of the present disclosure is to provide the system that integrates alcohol detection, real-time driver monitoring, and environmental assessment to deliver a comprehensive safety solution.

Another objective of this invention is to provide the system that detects and responds to different types of terrain and environmental conditions to ensure safe vehicle operation across various driving scenarios.

Yet another objective of this invention is to provide the system that enables the vehicle to dynamically adapt based on the driver's real-time condition and the external environment, ensuring safer operation under varying conditions.

### SUMMARY OF THE DISCLOSURE

The following is a summary description of illustrative embodiments of the invention. It is provided as a preface to assist those skilled in the art to more rapidly assimilate the detailed design discussion which ensues and is not intended in any way to limit the scope of the claims which are appended hereto in order to particularly point out the invention.

An embodiment of the present invention relates to a system to control a vehicle operation and method thereof. The system includes an alcohol detection unit, a driver monitoring unit (DMU), a storage unit, at least one vehicular detection unit, and a control unit to perform one or more functions to control the vehicle operation.

In accordance with an embodiment of the present invention, the alcohol detection unit is configured to detect an alcohol content in the sample of a driver of a vehicle. Further, the driver monitoring unit (DMU) is configured to monitor a driver profile in a real time.

In accordance with an embodiment of the present invention, at least one vehicular detection unit is configured to detect a type of a terrain and an external environment condition in a vehicle vicinity. Further, the at least one vehicular detection unit includes a radar sensor, a lidar sensor, a plurality of cameras, an ultrasonic sensor, a GPS receiver, an IMUs, and others.

In accordance with an embodiment of the present invention, the DMU includes a plurality of sensors and cameras to continuously monitor the driver profile to provide a plurality of driver profile information, which is stored in a storage unit. The plurality of driver profile information includes a current driving pattern, a historical driving pattern, and others.

In accordance with an embodiment of the present invention, the control unit is configured to allow the driver to crank a vehicle when the alcohol content in the sample of the driver is within a predefined threshold limit of the alcohol content, assess the plurality of driver profile information based on the received inputs from the alcohol detection unit, the DMU, and the storage unit after allowing the driver to crank the vehicle, determine whether the driver is impaired or not based on the assessment, allow the vehicle operation in a manual mode based on the determination, and control intermittently at least one vehicle function based on the detected type of terrain and the external environment condition, when an unsafe driving pattern is predicted.

In an embodiment, the type of terrain is any one or a combination of an uphill, a down-hill, a flat ground, a bump, a pothole, a wet ground, a muddy terrain, a barren land or a combination thereof.

In accordance with an embodiment of the present invention, the control unit further analyzes a driver's cognitive ability by assessing the plurality driver profile information periodically during the manual mode vehicle operation to gradually adjust the control of the at least one vehicle function.

In an embodiment of the present invention, the control unit analyzes the current driving pattern after cranking the vehicle for a predefined span that is any one or a combination of a predefined span of distance and a predefined span of time. In addition, the assessment of the control unit is based on the comparison of the stored historical driving pattern and the analyzed current driving pattern, when the alcohol content in the sample of the driver is within the predefined threshold limit of the alcohol content.

In accordance with an embodiment of the present invention, the control unit is anyone or a combination of a vehicle control unit (VCU), a vehicle management unit (VMU), a motor control unit (MCU), and an engine control unit (ECU).

According to another embodiment of the present invention, the method to control a vehicle operation comprises multiple steps. In the first step, a driver identification unit identifies an authorized driver. Further in the next, an alcohol content in the sample of the authorized driver of a vehicle is detected by an alcohol detection unit. In the next step, a driver monitoring unit (DMU) is monitoring a driver profile in a real-time. The DMU includes a plurality of sensors and cameras to continuously monitor the driver profile to provide a plurality of driver profile information.

In accordance with an embodiment of the present invention, in the next step, the plurality of driver profile information from the monitored driver profile is stored in a storage unit. In another step, a type of a terrain and an external environmental condition in a vehicle vicinity are detected by at least one vehicular detection unit.

In accordance with an embodiment of the present invention, in the next step, the control unit allows the driver to crank a vehicle when the alcohol content in the sample of the authorized driver is within a predefined threshold limit of the alcohol content

In accordance with an embodiment of the present invention, in the next step, the control unit assesses the plurality of driver profile information based on the received inputs from the alcohol detection unit, the DMU, and the storage unit after allowing the driver to crank the vehicle. In the next step, the control unit determines whether the driver is impaired or not based on the assessment.

In accordance with an embodiment of the present invention, in the next step, the control unit allows the vehicle operation in a manual mode based on the determination.

In accordance with an embodiment of the present invention, in the last step, the control unit controls intermittently at least one vehicle function based on the detected type of terrain and the external environment condition, when an unsafe driving pattern is predicted.

In accordance with an embodiment of the present invention, the control unit is anyone or a combination of a vehicle control unit (VCU), a vehicle management unit (VMU), a motor control unit (MCU), and an engine control unit (ECU).

These and other aspects herein will be better appreciated and understood when considered in conjunction with the following description and the accompanying drawing.

It should be understood, however, that the following descriptions are given by way of illustration and not of limitation. Many changes and modifications may be made within the scope of the invention herein without departing from the spirit thereof. The foregoing objectives are attained by employing the system to control the vehicle operation and the method there of for controlling intermittently the at least one vehicle function based on the detected type of terrain and the external environment condition, when the unsafe driving pattern is predicted.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
FIG. 1 illustrates a system 100 to control a vehicle operation, according to an embodiment of a present invention;
Fig. 2 is a flowchart 200 illustrating a method for automatically controlling at least one vehicle function, according to an exemplary embodiment of the present invention;
Fig. 3 is a flow chart illustrating a method 300 for controlling a vehicle operation, according to another embodiment of the present invention; and
Fig. 4 is a schematic diagram showing a number of functional modules of a processor 110 according to another exemplary embodiment of the present invention.

It should be noted that the accompanying figure is intended to present illustrations of a few examples of the present disclosure. The figure is not intended to limit the scope of the present disclosure. It should also be noted that the accompanying figure is not necessarily drawn to scale.

### DETAILED DESCRIPTION

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of elements or steps but not the exclusion of any other element or step or group of elements or steps.

The term "including" is used to mean "including but not limited to". "Including" and "including but not limited to" are used interchangeably. The accompanying drawing is used to help easily understand various technical features and it should be understood that the alternatives presented herein are not limited by the accompanying drawing. As such, the present disclosure should be construed to extend to any alterations, equivalents and substitutes in addition to those which are particularly set out in the accompanying drawing. Although the terms first, second, etc. may be used herein to describe various elements, these elements should not be limited by these terms. These terms are generally only used to distinguish one element from another.

Conditional language used herein, such as, among others, "can," "may," "might," "e.g.," and the like, unless specifically stated otherwise, or otherwise understood within the context as used, is generally intended to convey that certain alternatives include, while other alternatives do not include, certain features, elements and/or steps. Thus, such conditional language is not generally intended to imply that features, elements and/or steps are in any way required for one or more alternatives or that one or more alternatives necessarily include logic for deciding, with or without other input or prompting, whether these features, elements and/or steps are included or are to be performed in any particular alternative. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain alternatives require at least one of X, at least one of Y, or at least one of Z to each be present.

Terms control unit and CU may be used interchangeably for convenience.

Terms controller area network and CAN may be used interchangeably for convenience.

Terms Driver monitoring unit and DMU may be used interchangeably for convenience.

Terms Alcohol detection unit and ADU may be used interchangeably for convenience.

Terms Vehicular detection unit and VDU may be used interchangeably for convenience.

Terms driver and authorized driver may be used interchangeably for convenience.

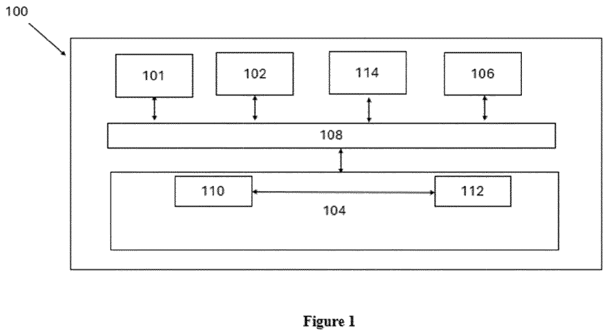

FIG. 1 illustrates a system 100 to control a vehicle operation, according to an embodiment of a present invention. The system 100 includes a driver identification unit 101, an alcohol detection unit (ADU) 102, a driver monitoring unit (DMU) 106, a storage unit, at least one vehicular detection unit (VDU) 114, and a control unit (CU) 104 to perform one or more functions to control the vehicle operation. The details of the components or modules of the system 100 and functionality of the modules have been further explained with reference to description of the forthcoming figures.

In accordance with an embodiment of the present invention, the driver identification unit 101 is configured to identify an authorized driver. The driver identification unit 101 uses various technologies to confirm that the driver is authorized to operate the vehicle and may include such as, biometric sensors; key fobs or cards; PIN or password entry; driver profiles etc.

In accordance with an embodiment of the present invention, the alcohol detection unit 102 is configured to detect an alcohol content in the sample of a driver of a vehicle. in addition, the sample of the authorized driver is any one or a combination of a breath sample, a blood sample, a saliva sample, a voice sample and eye-related samples.

. In an example, the ADU 102 includes a breath analyzer to measure the alcohol content in a driver's breath sample. It operates by analyzing the amount of alcohol content present, which may correlate with the blood alcohol concentration. The ADU 102 utilizes advanced technology such as infrared spectroscopy, image processing, voice processing or electrochemical sensors to provide precise readings. In addition, the alcohol detection unit 102 may be of any type such as; Breathalyzers; Chemical Test Strips, Continuous Alcohol Monitoring devices, Blood Alcohol Content (BAC) Sensors, Electronic Nose (E-Nose) etc.

In accordance with an embodiment of the present invention, the driver monitoring unit (DMU) 106 is configured to monitor a driver profile in a real time.

In accordance with an embodiment of the present invention, the DMU 106 includes a plurality of sensors and cameras to continuously monitor the driving pattern of the driver. The driving pattern of the driver includes an eye movement, a head movement, a steering controlling pattern, a voice pattern, a lane changing pattern, a braking pattern, an acceleration and a deceleration pattern, and others.

In one embodiment, the DMU's 106 sensors continuously monitor and record the driver's behavior and vehicle dynamics over the predefined in real-time to detect any deviations from normal driving patterns that may suggest impairment.

In accordance with an embodiment of the present invention, the storage unit 112 is configured to store a plurality of driver profile information from the monitored driver profile. The plurality of driver profile information includes a current driving pattern, a historical driving pattern, and others.

In accordance with an embodiment of the present invention, the at least one vehicular detection unit 114 is configured to detect a type of a terrain and an external environment condition in a vehicle vicinity. Further, the at least one vehicular detection unit 114 includes a radar sensor, a lidar sensor, a plurality of cameras, an ultrasonic sensor, a GPS receiver, an IMUs, and others. In addition, external environment condition information like traffic, lane markings, pavement, road signs, potholes, pedestrians, objects, road edges, position of the vehicle with respect to surroundings, other objects around the vehicle, potential collisions, upcoming bad road conditions, vehicle to server communication, vehicle to vehicle communication etc. may be collected by the at least one vehicular detection unit 114.

In accordance with an embodiment of the present invention, the control unit 104 is configured to allow the driver to crank a vehicle when the alcohol content in the sample of the driver is within a predefined threshold limit of the alcohol content.

In accordance with an embodiment of the present invention, the control unit 104 assesses the plurality of driver profile information based on the received inputs from the alcohol detection unit 102, the DMU 106, and the storage unit 112 after allowing the driver to crank the vehicle to determine the driving pattern. Further, the assessment of the control unit 104 is based on the comparison of the stored historical driving pattern and the analyzed current driving pattern, when the alcohol content in the sample of the authorized driver is within the predefined threshold limit of the alcohol content.

In accordance with an embodiment of the present invention, the control unit 104 further allows the vehicle operation in a manual mode based on the determination, when a safe driving pattern is identified. Further, the control unit 104 controls at least one vehicle function in partial or incremental manner based on the detected type of terrain and the external environment condition, when an unsafe driving pattern is identified.

In one example, the system 100 may have the modules placed at different positions within the vehicle. For instance, the driver monitoring module 106 to monitor the driver may be coupled to the windscreen and the alcohol detection unit 102 may be coupled to the A-pillar. Such components may either be connected through a wired connection or through a wireless communication to communicate and share data.

In another example, the system 100 may be connected to an external server (not shown in figure) through a wireless network, such as a datacenter for cloud backup and data archiving purpose.

In accordance with an embodiment of the present invention, the type of terrain is any one or a combination of an uphill, a down-hill, a flat ground, a bump, a pothole, a wet ground, a muddy terrain, a barren land or a combination thereof.

In accordance with an embodiment of the present invention, the at least one vehicle function includes a steering movement, a brake control, a vehicle speed acceleration or a vehicle speed deceleration, a lane change function, and like others.

In accordance with an embodiment of the present invention, the control unit 104 further analyzes the authorized driver's cognitive ability by assessing the plurality driver profile information periodically during the manual mode vehicle operation to gradually adjust the control of the at least one vehicle function.

In an embodiment of the present invention, the control unit 104 analyzes the current driving pattern after cranking the vehicle for a predefined span that is any one or a combination of a predefined span of distance and a predefined span of time.

In accordance with another embodiment of the present invention, the control unit 104 is anyone or a combination of a vehicle control unit (VCU), a vehicle management unit (VMU), a motor control unit (MCU), and an engine control unit (ECU).

Furthermore, the term related to the control unit 104 such as "controller", "control apparatus", "control device", "control module", or "server", etc refers to a hardware device including the storage unit 112 and a processor 110 configured to execute one or more steps interpreted as an algorithm structure. The storage unit 112 includes a memory that stores algorithm steps and the processor 110 executes the algorithm steps to perform one or more processes of the system 100 and method 300 in accordance with various exemplary embodiments of the present disclosure.

The control unit 104 according to exemplary embodiments of the present disclosure may be implemented through a nonvolatile memory configured to store algorithms for controlling the operation of various components of the vehicle or data about software commands for executing the algorithms, and the processor 110 configured to perform operation to be described above using the data stored in the storage unit 112. The storage unit 112 and the processor 110 may be individual chips.

Alternatively, the storage unit 112 and the processor 110 may be integrated in a single chip. The processor 110 may be implemented as one or more processors. The processor 110 may include various logic circuits and operation circuits, may process data according to a program provided from the storage unit 112, and may generate a control signal according to the processing result.

The control unit 104 may be at least one microprocessor operated by a predetermined program which may include a series of commands for carrying out the system 100 and method 300 included in the aforementioned various exemplary embodiments of the present disclosure.

The aforementioned invention may also be embodied as computer-readable code on a computer-readable recording medium. The computer-readable recording medium is any data storage device that can store data which may be thereafter read by a computer system and store and execute program instructions which may be thereafter read by a computer system.

Examples of the computer-readable recording medium include Hard Disk Drive (HDD), solid state disk (SSD), silicon disk drive (SDD), read-only memory (ROM), random-access memory (RAM), flash memory, CD-ROMs, magnetic tapes, floppy discs, optical data storage devices, etc and implementation as carrier waves (e.g., transmission over the Internet). Examples of the program instruction include machine language code such as those generated by a compiler, as well as high-level language code which may be executed by a computer using an interpreter or the like.

In various exemplary embodiments of the present disclosure, each operation described above may be performed by the control unit 104, and the control unit 104 may be configured by a plurality of control unit, or an integrated single control unit.

In various exemplary embodiments of the present disclosure, the control unit 104 may be implemented in a form of hardware or software, or may be implemented in a combination of hardware and software.

In various exemplary embodiments of the present disclosure, each control unit 104 includes one or more controllers, actuators, sensors, and/or other components that control the operation, handling, and other characteristics of the vehicle.

In various exemplary embodiments of the present disclosure, the control unit 104 may also include one or more input/output ("I/O") ports (e.g., serial ports, (e.g., RS233 port, USB, etc.) (not shown) and one or more network interfaces. The I/O port or ports may be operable to communicate with input/output devices, such as an internal and/or external display, keypad, mouse, pointing device, control panel, touch screen display, another computer-based device, printer, remote control, microphone, speaker, etc., which facilitates user interaction with the control unit 104.

Furthermore, the terms such as "unit", "module", etc. included in the specification mean units for processing at least one function or operation, which may be implemented by hardware, software, or a combination thereof.

In one embodiment, the control unit 104 interfaces with the controller area networks (CAN) 108, for transmission of command and control signals from the control unit 104 various electronics and electrical systems within the vehicle. Through its comprehensive control capabilities, the CU 104 optimizes the vehicle's overall efficiency, safety, and adaptability across diverse operating scenarios and driving conditions.

In accordance with another exemplary alternative embodiment of the present invention, the vehicle is generally equipped with the IoT which may or may not be integrated with the Control Unit (CU) 104.

In another alternative embodiment, the IoT is internally connected with a GPS (Global Positioning System) and network modules, allowing it to send notifications to a user device of either the driver or their relatives to warn them that the driver is overdrunk because their alcohol content is above than the predefined limit of the alcohol content.

In accordance with an exemplary embodiment of the present invention, the user device is any one or a combination of a desktop computer, a laptop computer, a user computer, a tablet computer, a personal digital assistant (PDA), a cellular telephone, a communication unit appliance, a camera, a smartphone, an enhanced general packet radio service (EGPRS) mobile phone, a media player, a navigation device, an email device.

Furthermore, the user device may be provided access to and/or receive application software executed and/or stored on any of the remote server.

In some examples, the user device performs functions of a social communication unit (not shown) to the cloud server. In some implementations, the user device may communicate wirelessly through the communication unit that is the part of the controller area network (CAN) 108, which may include digital signal processing circuitry where necessary.

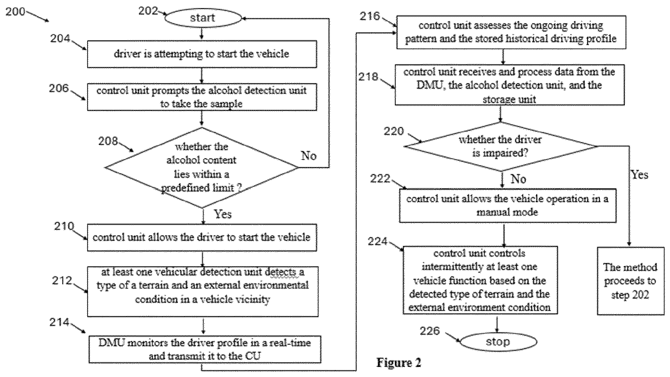

Fig. 2 is a flowchart 200 illustrating a method for automatically controlling at least one vehicle function, according to an exemplary embodiment of the present invention. The flowchart 200 starts at step 202, and proceeds to step 204, 206, 208, 210, 212, 214, 216, 218, 220, 222, 224,226 and 228.

The method is first operative at step 202.

At step 204, the driver is attempting to start the vehicle.

At step 206, the control unit 104 prompts the alcohol detection unit 102 to collect a breath sample when the driver attempts to start the vehicle. The control unit 104 starts analyzing the alcohol content in the breath sample against the predefined threshold limit of the alcohol content.

At step 208, a determination is made whether the measured alcohol content is within the predefined threshold limit, as set by safety regulations or user-defined parameters, when the determination is "YES", then the flowchart 200 proceeds to step 210 otherwise the flowchart 200 proceeds to step 202.

At step 210, the control unit 104 allows the driver to start the vehicle.

At step 212, the at least one vehicular detection unit 114 detects the type of the terrain and the external environmental condition in the vehicle vicinity.

At step 214, the DMU 106 monitors the driver profile in the real-time and transmits it to the CU 104.

At step 216, the control unit 104 assesses the ongoing driving pattern and the stored historical driving profile.

At step 218, the control unit 104 continuously receives and processes data from the DMU 106, the ADU 102, and the storage unit 112. This real-time assessment helps in identifying any changes or irregularities in driving patterns that may indicate impairment.

At step 220, another determination is made whether the driver is impaired, when the determination is "YES", then the flowchart 200 proceeds to step 202 otherwise the flowchart 200 proceeds to step 222. The determination is based on the data from both the ADU 102 and DMU 106. Further, the control unit 104 proactively intervenes if impairment is detected.

At step 222, the control unit 104 allows the vehicle operation in a manual mode.

At step 224, the control unit intermittently controls the at least one vehicle function based on the detected type of terrain and the external environment condition. These actions are designed to prevent potential accidents and enhance overall road safety.

At step 226, the method is terminated.

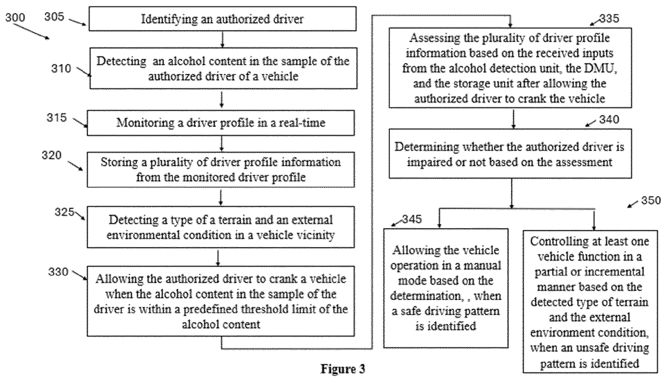

Fig. 3 is a flow chart illustrating a method 300 for controlling vehicle operation, according to another exemplary embodiment of the present invention. The method 300 includes a driver identification unit 101, an alcohol detection unit (ADU) 102, a driver monitoring unit (DMU) 106, a storage unit, at least one vehicular detection unit (VDU) 114, and a control unit (CU) 104 to perform multiple steps. The method 300 starts at step 305 and proceeds to steps 310, 315, 320, 325, 330, 335, 340 and 345.

The method 300 is first operative at step 305 in which the driver identification unit 101 identifies an authorized driver.

At step 310, the alcohol detection unit 102 detects an alcohol content in the breath of a driver

At step 315, the driver monitoring unit (DMU) 106 is configured to monitor a driver profile in a real-time. The DMU 106 includes a plurality of sensors and cameras to continuously monitor the driver profile to provide a plurality of driver profile information. Further, the plurality of driver profile information includes, a current driving pattern, a historical driving pattern, and others.

At step 320, the storage unit 112 stores the plurality of driver profile information from the monitored driver profile.

At step 325, the at least one vehicular detection unit 114 detects a type of a terrain and an external environmental condition in a vehicle vicinity. Further, the type of terrain is any one or a combination of an uphill, a down-hill, a flat ground, a bump, a pothole, a wet ground, a muddy terrain, a barren land or a combination thereof.

In accordance with an embodiment of the present invention, the at least one vehicular detection unit 114 includes a radar sensor, a lidar sensor, a plurality of cameras, an ultrasonic sensor, a GPS receiver, an IMUs, and others.

At step 330, the control unit 104 allows the driver to crank a vehicle when the alcohol content in the breath of the driver is within a predefined threshold limit of the alcohol content.

At step 335, the control unit 104 assesses the plurality of driver profile information based on the received inputs from the alcohol detection unit 102, the DMU 106, and the storage unit 112 after allowing the driver to crank the vehicle. Further, the assessment of the control unit 104 is based on the comparison of the stored historical driving pattern and the analyzed current driving pattern, when the alcohol content in the sampleof the driver is within the predefined threshold limit of the alcohol content.

At step 340, the control unit 104 determines the driving pattern based on the assessment and proceeds to either step 345 or step 350.

At step 345, the control unit 104 allows the vehicle operation in a manual mode when a safe driving pattern is identified.

At step 350, the control unit 104 controls at least one vehicle function in a partial or incremental manner to ensure a safe handoff, based on the detected type of terrain and the external environment condition, when an unsafe driving pattern is predicted. In this step the vehicle may operate on a semi-autonomous mode, in which the vehicle is not fully controlled either by the authorized driver or autonomous system. In an implementation, the authorized driver can operate the all the vehicle functions but effectiveness or implementation of those function on the vehicle is controlled by the system 100.

In accordance with an embodiment of the present invention, the type of terrain is any one or a combination of an uphill, a down-hill, a flat ground, a bump, a pothole, a wet ground, a muddy terrain, a barren land or a combination thereof.

In accordance with an embodiment of the present invention, the at least one vehicle function includes a steering movement, a brake control, a vehicle speed acceleration or a vehicle speed deceleration, a lane change function, and like others.

In accordance with an embodiment of the present invention, the control unit 104 further analyzes a driver's cognitive ability by assessing the plurality driver profile information periodically during the manual mode vehicle operation to gradually adjust the control of the at least one vehicle function.

In an embodiment of the present invention, the control unit 104 analyzes the current driving pattern after cranking the vehicle for a predefined span that is any one or a combination of a predefined span of distance and a predefined span of time.

In an exemplary embodiment, if the vehicle is in dense traffic and the driver is driving the vehicle in manual mode the detected alcohol content is below the threshold limit of the same. In this condition, system 100 relates the real-time driving behavior with the real-time traffic condition to make the decision to which extent the system 100 intervenes in the operation of the vehicle such as steering movement control or brake control, etc. Similarly, if the system detects an uphill gradient, then again it determines the real-time driving pattern of the driver and also compares the same with the historical driving pattern of the same driver and decides the system intervention extent on a real-time basis and controls various functions such as lane changing control and brake control etc.

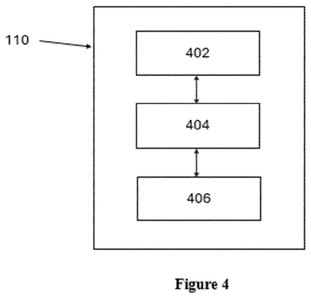

Fig. 4 schematically illustrates, in terms of a number of functional modules, the components of the control unit 104, according to another exemplary embodiment of the present invention. The number of functional modules comprise, receiving module 402, a data processing module 404, and a decision module 406.

In general, each functional module 402-406 can be implemented either in hardware or software. Ideally, the control unit 104 includes the processor 110 which has the number of functional modules 402-406, potentially in collaboration with the communications interface (now shown in the figure) and/or the storage unit 112, may implement one or more functions, as described herein.

In an embodiment, the receive module 402, configured to receive data from the alcohol detection unit 102, the DMU 106, and the at least one vehicular detection unit 114. Further, the data processing module 404 integrates and processes the received data from the receive module 402. Furthermore, the decision module 406 determines whether the driver is fit to operate the vehicle and adjusts vehicle functions manually or not. In addition, the decision module 406, prioritizes safety by preventing impaired driving and adapting vehicle operations to ensure safe driving conditions based on real-time inputs and processed data.

In another advantageous embodiment, the system 100 controls a vehicle operation through real-time alcohol detection and continuous monitoring of the driver's condition to improve road safety. The system 100 integrates alcohol detection, real-time driver monitoring, and environmental assessment to deliver a comprehensive safety solution.

In another advantageous embodiment, the system 100 detects and responds to different types of terrain and environmental conditions to ensure safe vehicle operation across various driving scenarios. Further, the system 100 enables the vehicle to dynamically adapt based on the driver's real-time condition and the external environment, ensuring safer operation under varying conditions.

In accordance with another advantageous embodiment, the invention is specifically designed to meet rigorous regulatory safety standards that govern vehicle operation and prevent impaired driving. It includes fail-safe mechanisms and redundant systems to ensure dependable performance across various environmental and driving conditions. Routine maintenance and calibration procedures are essential to uphold the system's 100 accuracy and effectiveness consistently.

While the detailed description has shown, described, and pointed out novel features as applied to various alternatives, it can be understood that various omissions, substitutions, and changes in the form and details of the devices or algorithms illustrated can be made without departing from the scope of the disclosure. As can be recognized, certain alternatives described herein can be embodied within a form that does not provide all of the features and benefits set forth herein, as some features can be used or practiced separately from others.

The disclosures and the description herein are intended to be illustrative and are not in any sense limiting the invention, defined in scope by the following claims.

### ELEMENT LIST

| **COMPONENT** | **REFERENCE NUMBER** |
|---|---|
| System | 100 |
| Driver identification unit | 101 |
| Alcohol detection unit | 102 |
| Control unit (CU) | 104 |
| Driver Monitoring Unit (DMU) | 106 |
| Controller Area Network | 108 |
| Processor | 110 |
| Storage unit | 112 |
| vehicular detection unit | 114 |
| receiving module | 402 |
| data processing module | 404 |
| decision module | 406 |

## Claims

1. A system to control a vehicle operation, comprising:
a driver identification unit 101, configured to identify an authorized driver.
an alcohol detection unit (ADU) 102 configured to detect an alcohol content in the sample of the authorized driver of a vehicle;
a driver monitoring unit (DMU) 106, configured to monitor a driver profile in a real time;
a storage unit 112, configured to store a plurality of driver profile information from the monitored driver profile ;
at least one vehicular detection unit (VDU) 114 to detect a type of a terrain and an external environment condition in a vehicle vicinity; and
a control unit 104 configured to:
allow the authorized driver to crank a vehicle when the alcohol content in the sample of the authorized driver is within a predefined threshold limit of the alcohol content;
assess the plurality of driver profile information based on the received inputs from the alcohol detection unit 102, the DMU 106, and the storage unit 112 after allowing the authorized driver to crank the vehicle;
determine a driving pattern based on the assessment to;
either allow the vehicle operation in a manual mode when a safe driving pattern is identified; and
or control at least one vehicle function in a partial or incremental manner to ensure a safe handoff, based on the detected type of terrain and external environmental conditions, when an unsafe driving pattern is identified.

2. The system 100 as claimed in claim 1, wherein the control unit 104 further analyzes a cognitive ability of the authorized driver by assessing the plurality driver profile information periodically during the partial control mode vehicle operation to gradually adjust the control of the at least one vehicle function.

3. The system 100 as claimed in claim 1, wherein the plurality of driver profile information includes, a current driving pattern, a historical driving pattern, and others.

4. The system 100 as claimed in claims 1&3, wherein the control unit 104 analyzes the current driving pattern after cranking the vehicle for a predefined span that is any one or a combination of a predefined span of distance and a predefined span of time.

5. The system 100 as claimed in claims 1 &4, wherein the assessment of the control unit 104 is based on the comparison of the stored historical driving pattern and the analyzed current driving pattern, when the alcohol content in the sample of the authorized driver is within the predefined threshold limit of the alcohol content.

6. The system 100 as claimed in claim 1, wherein the at least one vehicle function includes:
a steering movement;
a brake control;
a vehicle speed acceleration or a vehicle speed deceleration;
a lane change function, and like others.

7. The system 100 as claimed in claim 1, wherein the control unit 104 is anyone or a combination of a vehicle control unit (VCU), a vehicle management unit (VMU), a motor control unit (MCU), and an engine control unit (ECU).

8. The system 100 as claimed in claim 1, wherein the DMU 106 includes a plurality of sensors and cameras to monitor the driver profile.

9. The system 100 as claimed in claim 1, wherein the at least one vehicular detection unit 114 includes a radar sensor, a lidar sensor, a plurality of cameras, an ultrasonic sensor, a GPS receiver, an IMUs, and others.

10. The system 100 as claimed in claim 1, wherein the type of terrain is any one or a combination of an uphill, a down-hill, a flat ground, a bump, a pothole, a wet ground, a muddy terrain, a barren land or a combination thereof.

11. The system 100 as claimed in claim 1, wherein the sample of the authorized driver is any one or a combination of a breath sample, a blood sample, a saliva sample, a voice sample and eye-related samples.

12. A method to control a vehicle operation, comprising:
Identifying, by a driver identification unit 101, an authorized driver;
detecting, by an alcohol detection unit 102, an alcohol content in the sample of the authorized driver of a vehicle;
monitoring, by a driver monitoring unit (DMU) 106, a driver profile in a real-time;
storing, by a storage unit 112, a plurality of driver profile information from the monitored driver profile;
detecting, by at least one vehicular detection unit 114, a type of a terrain and an external environmental condition in a vehicle vicinity;
allowing, by a control unit 104, the authorized driver to crank a vehicle when the alcohol content in the sample of the authorized driver is within a predefined threshold limit of the alcohol content;
assessing, by the control unit 104, the plurality of driver profile information based on the received inputs from the alcohol detection unit 102, the DMU 106,
and the storage unit 112 after allowing the authorized driver to crank the vehicle;
determining, by the control unit 104, a driving pattern based on the assessment to;
either allowing, by the control unit 104, the vehicle operation in a manual mode when a safe driving pattern is identified; and
or controlling, by the control unit 104, at least one vehicle function in a partial or incremental manner to ensure a safe handoff based on the detected type of terrain and the external environment condition, when an unsafe driving pattern is identified.
